# EUROPEAN PATENT APPLICATION

(11) **EP 4 582 688 A1**
(43) Date of publication of application: **09.07.2025**
(21) Application number: 24382002.4
(22) Date of filing: 02.01.2024
(51) Int. Cl.: F03D 1/06, F03D 17/00

(54) **WIND TURBINE BLADE SHELL COMPONENT**

(71) Applicant: LM Wind Power A/S, 6000 Kolding (DK)
(72) Inventor: CANAL VILA, Marc, 08005 BARCELONA (ES); MUÑOZ SIMÓN, Arturo, 08005 BARCELONA (ES)
(74) Representative: ZBM Patents - Zea, Barlocci & Markvardsen

(57) **Abstract**

There is provided a wind turbine blade shell component. The wind turbine blade shell component comprises an outer layer and an inner layer beneath the outer layer. The outer layer covers the wind turbine blade shell component. The inner layer comprises a first material having a first property and a second material having a second property. The first property is different from the second property. The inner layer is readable by an image capturing device to determine erosion of the outer layer.

## Description

The present disclosure relates to a wind turbine blade shell component comprising an outer layer and an inner layer, a method of determining erosion of the wind turbine blade shell component and a system comprising the wind turbine blade shell component and a controller.

### BACKGROUND

For a wind turbine to generate energy as efficiently as possible the wind turbine blade must be in good condition. For instance, erosion of a wind turbine blade shell component may cause a decrease in the efficiency of conversion of wind energy into usable mechanical energy and then into electrical energy. Resultingly, much time and effort are expended on inspecting wind turbine blade shell components to determine whether a maintenance operation is necessary and, if so, performing this maintenance operation.

Traditionally, wind turbine blade shell components have been manually inspected for damage and/or wear. However, manual inspection is resource intensive and may be dangerous. As an alternative to manual inspection, remote control cameras may be used. However, with remote control cameras it is very difficult to obtain sufficiently accurate 3D images to evaluate the impact of any erosion of the wind turbine blade shell component on performance (e.g., noise or annual energy production - AEP). For instance, ambient conditions, such as lighting, may impact the accuracy and/or reliability of such 3D images.

Hence there is a need for a wind turbine blade shell component that facilitates accurate determination of erosion suffered by the wind turbine blade shell component without need for manual inspection.

### SUMMARY

According to a first aspect of the present disclosure, there is provided a wind turbine blade shell component. The wind turbine blade shell component comprises an outer layer and an inner layer beneath the outer layer. The outer layer covers the wind turbine blade shell component. The inner layer comprises a first material having a first property and a second material having a second property. The first property is different from the second property. The inner layer is readable by an image capturing device to determine erosion of the outer layer.

Advantageously, the different properties of the first material and the second material may enable accurate and stable scanning of the wind turbine blade shell component. Furthermore, using the first material and the second material may improve the identification of erosion by the image capturing device. Accurate determination of erosion suffered by the wind turbine blade component (e.g., the entirety of the wind turbine blade shell component or a portion thereof) can be performed without need for manual inspection. The inner layer being beneath the outer layer is advantageous, because this arrangement may eliminate or reduce erosion experienced by the inner layer.

According to a second aspect of the present disclosure, there is provided a method of determining erosion of a wind turbine blade shell component of the first aspect. The method comprises scanning a target area of the wind turbine blade shell component using an image capturing device and identifying an eroded area in the target area by detecting the inner layer in the target area.

According to a third aspect of the present disclosure, there is provided a system comprising the wind turbine blade shell component of the first aspect and a controller. The controller is configured to control an image capturing device to scan a target area of the wind turbine blade shell component and identify an eroded area on the target area by detecting the inner layer in the target area.

Advantages derived from the second and third aspects may be the same or similar to those mentioned regarding the first aspect.

### BRIEF DESCRIPTION OF THE DRAWINGS

Non-limiting examples of the present disclosure will be described in the following, with reference to the appended drawings, in which:
Figure 1 shows a perspective view of a wind turbine;
Figure 2 shows a perspective view of a wind turbine blade shell component;
Figure 3 shows a perspective view of a part of the wind turbine blade shell component;
Figure 4 shows a plane view of an inner layer of the wind turbine blade shell component;
Figure 5 shows a block diagram of a method of determining erosion of a wind turbine blade shell component;
Figure 6 shows a system comprising the wind turbine blade shell component and a controller; and
Figure 7 shows an unmanned aerial vehicle comprising an image capturing device and a controller.

### DETAILED DESCRIPTION OF EXAMPLES

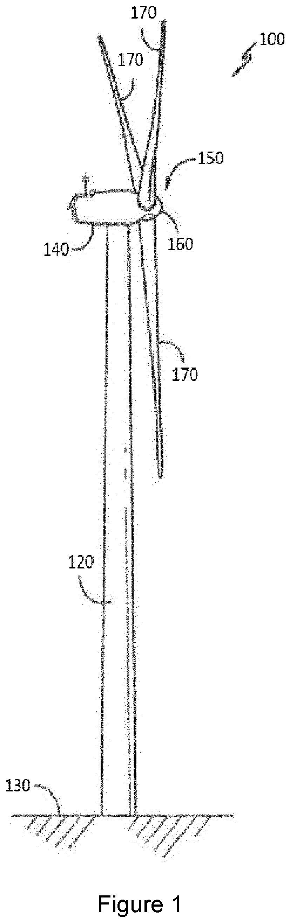

Figure 1 shows a perspective view of one example of a wind turbine 100. As shown, the wind turbine 100 includes a tower 120 extending from a support surface 130, a nacelle 140 mounted on the tower 120 and a rotor 150 coupled to the nacelle 140. The rotor 150 includes a rotor hub 160 and at least one wind turbine blade 170 coupled to and extending outwardly from the rotor hub 160. In the example shown in Figure 1, the rotor 150 includes three wind turbine blades 170. However, the rotor 150 may include more or less than three wind turbine blades 170. Each wind turbine blade 170 may be spaced from the rotor hub 160 to facilitate rotating the rotor 150 to enable kinetic energy to be transferred from the wind into usable mechanical energy and, subsequently, electrical energy. For instance, the rotor hub 160 may be rotatably coupled to an electric generator positioned within the nacelle 140 or forming part of the nacelle 140 to permit electrical energy to be produced.

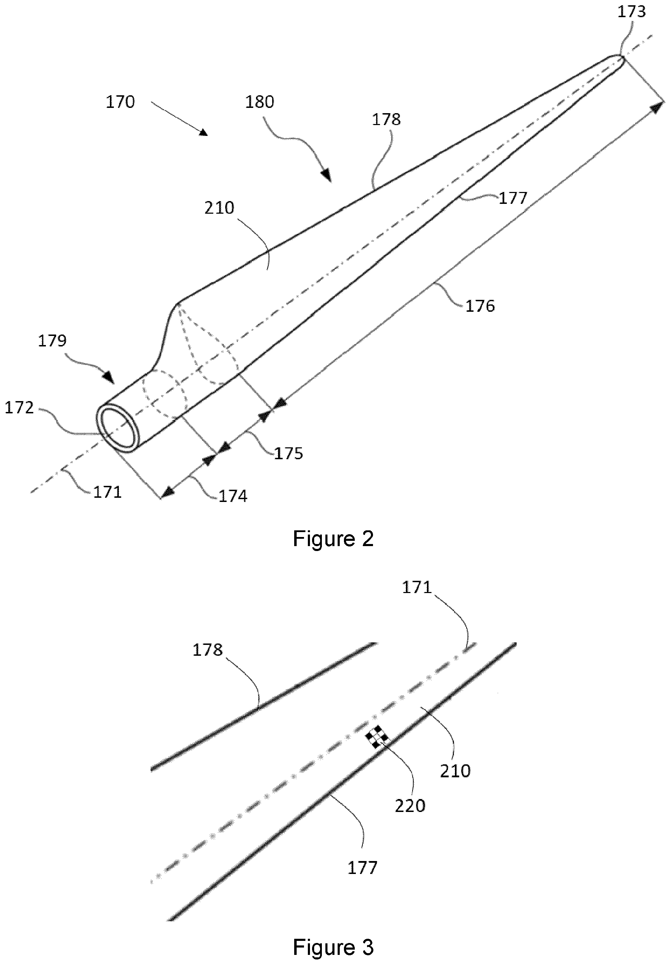

Figure 2 shows an example of a wind turbine blade 170. The wind turbine blade 170 comprises a reinforcing structure (not shown in Figure 2) and a wind turbine blade shell 180 surrounding the reinforcing structure. The wind turbine blade shell 180 defines the outer shape of the wind turbine blade 170.

The wind turbine blade 170 extends in a longitudinal direction or lengthwise direction 171 from a blade root end 172 to a blade tip end 173. The wind turbine blade 170 comprises a blade root region or portion 174 closest to the rotor hub 160, a profiled or an airfoil portion 176 furthest away from the rotor hub 160 and a transition portion 175 between the blade root portion 174 and the airfoil portion 176. The wind turbine blade 170 comprises a leading edge 177 facing the direction of rotation of the wind turbine blade 170 when mounted on the rotor hub 160 and a trailing edge 178 facing the opposite direction of the leading edge 177.

The airfoil portion 176 has a shape designed to generate lift, whereas the blade root portion 174 has a circular or elliptical cross-section for structural considerations and easy mounting of the wind turbine blade 170 to the rotor hub 160. The diameter or the chord of the blade root portion 174 may be constant along the entire blade root portion 174. At the transition portion 175, the profile gradually changes from the circular or elliptical cross-section of the blade root portion 174 to the airfoil profile of the airfoil portion 176. The wind turbine blade 170 may be connected to the rotor hub 160 through a blade root attachment portion 179.

The wind turbine blade shell 180 comprises an outer layer or coating 210. The outer layer 210 may comprise a paint or a gel coat of, for example, 100 microns in thickness. The gel coat may be transparent or translucent. Advantageously, the outer layer 210 may help protect the wind turbine blade shell 180 from environmental conditions. The outer layer 210 covers an inner layer of the shell 180.

Figure 3 shows a close up of part of the wind turbine blade shell 180 of Figure 2, including the lengthwise direction 171, the leading edge 177, the trailing edge 178 and the outer layer 210. Figure 3 also shows the inner layer 220 and illustrates how erosion of the outer layer 210 may reveal the inner layer 220 of the wind turbine blade shell 170 or a component of the shell of the wind turbine blade (i.e., a wind turbine blade shell component). A wind turbine blade shell 180 may comprise a wind turbine blade shell component and a remaining wind turbine blade shell component, where the remaining wind turbine blade shell component does not comprise the inner layer 220. A wind turbine blade shell component may include the entirety of the component or a region or portion thereof. For example, the wind turbine blade shell component may comprise or be the leading edge 177 or a portion thereof.

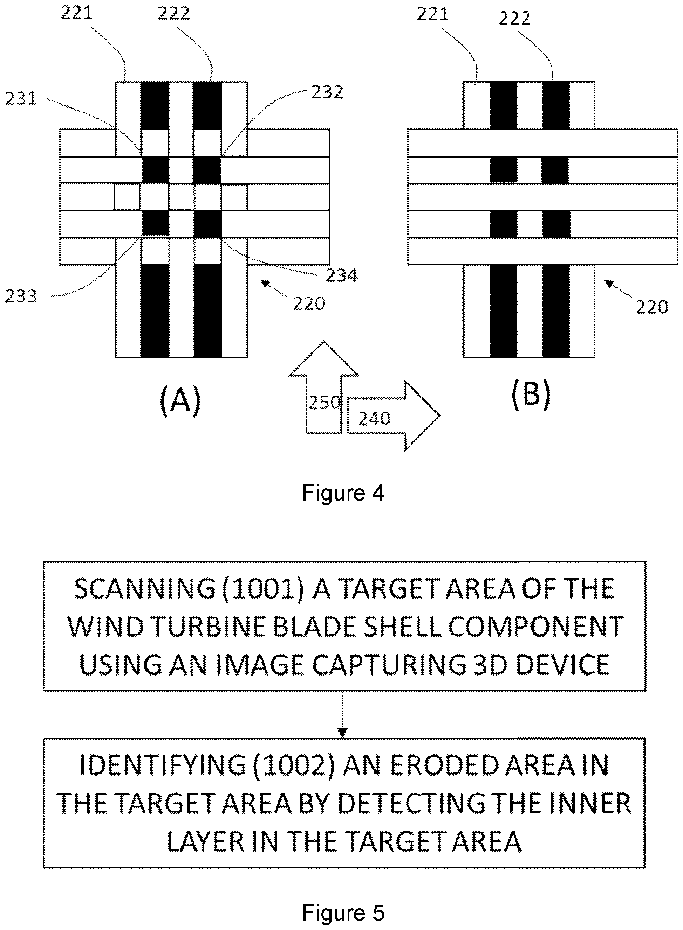

Figure 4 shows a plan view of the inner layer 220. The inner layer 220 comprises a first material 221 and a second material 222. The first material 221 and the second material 222 have different properties, herein termed a first property and a second property, respectively. The first property is different from the second property. It should be noted that the terms "first" and "second" are merely used throughout this description as labels and do not imply any order.

Advantageously, the inner layer 220 comprising a first material 221 and a second material 222 having different properties may improve the identification of erosion. The inner layer 220 may be easily identified when compared with the outer layer 210. In this way, accurate determination of erosion (e.g., size, shape, depth) suffered by the wind turbine blade shell component (e.g., the entirety of the wind turbine blade shell component or a portion thereof) may be performed without need for manual inspection and even in poor lighting conditions.

Furthermore, the inner layer 220 comprising a first material 221 and a second material 222 having different properties may enable accurate and stable reading (e.g., scanning) of the wind turbine blade shell component by facilitating a plurality of reference markers, as explained in more detail below. For example, the first material 221 and the second material 222 may define a pattern that may be employed by a 3D scanning device as reference markers. 3D scanning devices may use a plurality of reference markers or points to enable accurate recognition of its position during the scanning process. For instance, the reference markers enable multiple images to be aligned correctly when a 3D scanning device is employed. In other words, the reference markers permit reduced scanning errors (e.g., resulting from misalignment of images/scans) when scanning a large object such as the wind turbine blade shell 180.

The inner layer 220 being beneath the outer layer 210 is advantageous, because this arrangement may eliminate or reduce erosion experienced by the first material 221 and the second material 222. In other words, reference markers could be arranged, for example, on an outer surface of the wind turbine blade shell component. However, on the outer surface of the wind turbine blade shell component, these reference markers would erode and so become useless for enabling stable scanning of the wind turbine blade shell component. Therefore, the inner layer may provide a reliable plurality of reference markers for the scanning process.

As shown in Figure 4, the first material 221 and the second material 222 having different properties may allow formation a pattern on the inner layer 220, thereby defining or determining the plurality of reference markers 231, 232, 233, 234 for enabling stable scanning of the wind turbine blade shell component by an image capturing device (e.g., a 3D scanning device). For example, the first material 221 and the second material 222 may have different colors (e.g., hue or tone). In the example shown in Figure 4, the first material 221 is white and the second material 222 is black. In other examples, additionally or alternatively to the first material 221 and the second material 222 having different colors, the first material 221 and the second material may have different textures (e.g., roughness/smoothness) and/or different optical properties (e.g., reflectivity).

As well as the properties of the first material 221 and the second material 222 allowing formation of the pattern, the pattern may result from the arrangement of the first material 221 and the second material 222. For instance, as shown in Figure 4, the first material 221 and the second material 222 may be arranged biaxially. In other words, a longitudinal axis of the first material 221 may be arranged perpendicularly to a longitudinal axis of the second material 222.

Relatedly, the first material 221 and the second material 222 may be interweaved. Two different interweaved arrangements of the first material 221 and the second material 222 are shown in Figure 4. Advantageously, interweaving may increase the strength of the inner layer 220, reducing its susceptibility to damage.

In Figure 4(A) and in Figure 4(B), in a first direction 240 the composition of the inner layer 220 alternates between the first material 221 and the second material 222, and in a second direction 250 only the first material 221 is used. In Figure 4A, each piece of the first material 221 laid in the first direction 240 passes under each piece of the first material 221 laid in the second direction 250 and over each piece of the second material 222 laid in the second direction. In contrast, in Figure 4B, each piece of the first material 221 laid in the first direction 240 passes over each piece of the first material and each piece of the second material 222 laid in the second direction 250. The arrangement of the first material 221 and the second material 222 in Figure 4(A) results in a grid pattern. Advantageously, a grid pattern may be particularly suitable for facilitating reliable scanning of the inner layer 220, because its regularity may be more easily read by the 3D scanning device and, subsequently, processed. Further advantageously, inner layers 220 having a grid pattern may be straightforward to manufacture at low cost.

By interweaving the first material and the second material, advantageously, intersection areas or points 231, 232, 233, 234 may be created that have a different (third) property compared with both the first material 221 and the second material. Creation of this different (third) property may facilitate use of the intersection areas 231, 232, 233, 234 as reference markers, because contrast between these intersection areas 231, 232, 233, 234 and their surroundings may be increased.

The first material 221 and/or the second material 222 may comprise fibers. The first material 221 and/or the second material 222 may comprise at least one of: carbon fiber, glass fiber and plastic. Advantageously, these materials may be strong yet light.

Figure 5 shows a block diagram of a method of determining erosion (i.e., establishing whether erosion has occurred and/or evaluating the extent of erosion that has occurred) of a wind turbine blade shell component as described in relation to Figures 1 to 4. The method comprises scanning 1001 a target area of the wind turbine blade shell component using an image capturing device and identifying an eroded area in the target area by detecting the inner layer 220 in the target area.

The target area is any part of the wind turbine blade shell component for which determination of erosion is desired. The eroded area is an exposed area of the inner layer 220, such as that shown in Figure 3. In other words, the eroded area is a part of the wind turbine blade shell component where the outer layer 210 has been completely removed or where enough of the outer layer 210 has been removed such that the inner layer 220 is visible through the remaining outer layer 210 (e.g., if the outer layer is a gel coat). In the case of the presence of an eroded area in the target area, by scanning 1001 the target area, as described above, the plurality of reference markers 231, 232, 233, 234, for example, can be used to stabilize the image capturing device (e.g., a 3D scanning device), for obtaining 1002 an image of the wind turbine blade shell component.

The image capturing device may comprise and simple camera (i.e., a camera configured to take two dimensional images) and/or a 3D scanning device. The simple camera and the 3D scanning device may be integrated or discrete units within the image capturing device. The identifying 1002 may be performed by the image capturing device or by another electronic device that in (e.g., electronic) communication with the image capturing device.

The method may comprise displacing or moving the image capturing device proximal (e.g., adjacent) to the target area (e.g., to perform the scanning 1001). In this context, displacing the image capturing device proximal to the target area may mean moving the image capturing device such that the target area is in a field of view of the image capturing device. This moving may be performed using an unmanned aerial vehicle. Use of an unmanned aerial vehicle may, advantageously, enable the method to be performed easily for an offshore wind turbine 100.

The method may comprise determining an erosion severity based on the identifying 1002. Determining an erosion severity may comprise determining a shape and/or size of the eroded area. For example, identifying 1002 the eroded area may enable the size of the inner layer 220 in the eroded area to be ascertained by detecting and/or counting a set (e.g., all or some) of the plurality reference markers 231, 232, 233, 234 in the eroded area. The different properties of the first material 221 and the second material 222 enable accurate determination of the size of the eroded area even in poor lighting conditions, for instance.

Determining the erosion severity may comprise determining a depth of the outer layer 210 in the eroded area. For example, in the case of the image capturing device comprising a 3D scanning device, as part of the identifying 1002, the method may comprise detecting a set (e.g., all or some) of the plurality reference markers 231, 232, 233, 234 of the inner layer 220 of eroded area and referencing the 3D scanning device based on the identified set of reference markers (e.g., an arrangement of the set of reference markers). For example, the set of reference markers may be used for calibrating the position of the 3D scanning device. To this end, detecting the set of reference markers may comprise obtaining spatial coordinates of the set of reference markers. Advantageously, therefore, scanning 1001 may be performed accurately and reliably, and the method may comprise obtaining 3D image data of the wind turbine blade shell component by scanning the wind turbine blade shell component with the 3D scanning device, allowing determination of the depth of the outer layer 210.

The method may comprise determining a maintenance operation based on the erosion severity. Examples of maintenance operations include painting the wind turbine blade component and applying a gel coat to the wind turbine blade component. The result of the determination may be output to an audio and/or visual display.

Determining the erosion severity of the eroded area may comprise comparing the obtained 3D image data to non-eroded 3D model data. The non-eroded 3D model data may be retrieved from a memory or storage (e.g., a database). Advantageously, retrieving the non-eroded 3D model data from a storage may be performed quickly. Alternatively, the non-eroded 3D model data may be generated based on the obtained 3D image (e.g., the non-eroded 3D model data may be estimated using the obtained 3D image data as input data for a model or simulation). Advantageously, generating the non-eroded 3D model data based on the obtained 3D image data may result in more accurate determination of erosion severity compared with retrieving the non-eroded 3D model data from a storage.

Determining a maintenance operation based on the erosion severity may comprise comparing the erosion severity to a threshold erosion severity. For example, a depth and/or size of the erosion area may be compared with a predetermined depth and/or size that is indicative of erosion of the wind turbine blade shell component such that maintenance should be performed. In this example, in the event the erosion severity is below the threshold erosion severity it is determined not to perform a maintenance operation, and in the event the erosion severity is above the threshold erosion severity it is determined to perform a maintenance operation. Advantageously, in this way the cost of sending a service team merely to inspect a wind turbine blade shell component may be avoided; a service team may only be sent when maintenance (e.g., repair) is required.

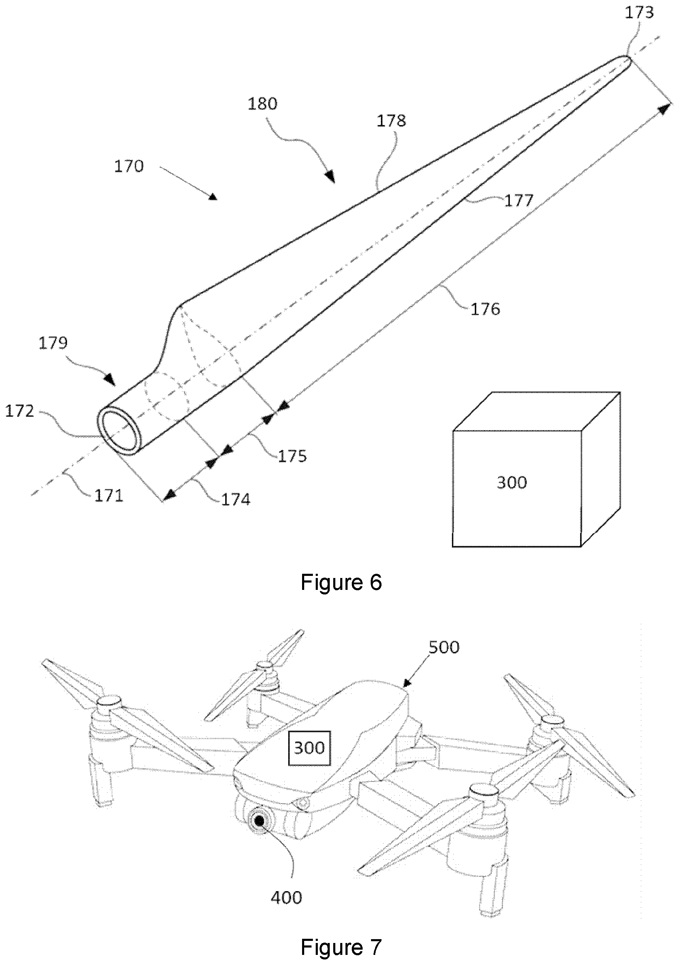

Figure 6 shows a system comprising the wind turbine blade 170 of Figure 1 and a controller 300, together forming a system. The controller 300 is configured to control the image capturing device to scan a target area of the wind turbine blade shell component and to identify an eroded area in the target area by detecting the inner layer in the target area, as described above in relation to Figure 5. Similarly, the controller 300 may be configured to determine an erosion severity of the eroded area based on the identifying.

The system may also comprise the image capturing device.

The system may also comprise an unmanned aerial vehicle 500. Use of an unmanned aerial vehicle may, advantageously, enable the method to be performed easily for an offshore wind turbine 100. As shown in Figure 7, the unmanned aerial vehicle 500 may comprise the image capturing device 400 and/or the controller 300. Advantageously, the system comprising the unmanned aerial vehicle 500, the image capturing device and the controller 300 enables the method to be performed completely remotely, leading to reduced costs and safety risks. The controller 300 may control movement of the unmanned aerial vehicle 500.

For reasons of completeness, various aspects of the present disclosure are set out in the following numbered clauses:
Clause 1: A wind turbine blade shell component, the wind turbine blade shell component comprising:
   an outer layer covering the wind turbine blade shell component; and
   an inner layer beneath the outer layer, wherein the inner layer comprises a first material having a first property and a second material having a second property, wherein the first property is different from the second property,
   wherein the inner layer is readable by an image capturing device to determine erosion of the outer layer.
Clause 2: The wind turbine blade shell component of clause 1, wherein the first material and the second material form a pattern.
Clause 3: The wind turbine blade shell component of clause 2, wherein the pattern defines a plurality of reference markers for the image capturing device.
Clause 4: The wind turbine blade shell component of any preceding clause, wherein the first material and the second material are arranged biaxially.
Clause 5: The wind turbine blade shell component of any preceding clause, wherein the first material and the second material are interweaved.
Clause 6: The wind turbine blade shell component of any preceding clause, wherein the first property and the second property are colors.
Clause 7: The wind turbine blade shell component of any preceding clause, wherein the first material and/or the second material comprise fibers.
Clause 8: The wind turbine blade shell component of any preceding clause, wherein the first material and/or the second material comprise at least one of: carbon fiber, glass fiber and plastic.
Clause 9: The wind turbine blade shell component of any preceding clause, wherein the outer layer comprises a paint or a gel coat.
Clause 10: The wind turbine blade shell component of any preceding clause, wherein the wind turbine blade shell component comprises a leading edge portion of a wind turbine blade shell.
Clause 11: The wind turbine blade shell component of clause 10, wherein the wind turbine blade shell component is the leading edge portion.
Clause 12: A wind turbine blade shell, comprising the wind turbine blade shell component of any of clauses 1 to 11.
Clause 13: The wind turbine blade shell of claim 12 comprising a remaining wind turbine blade shell component, wherein the remaining wind turbine blade shell component is free from at least one of the first material and the second material.
Clause 14: A method of determining erosion of the wind turbine blade shell component of clauses 1 to 11, the method comprising:
   scanning a target area of the wind turbine blade shell component using an image capturing device; and
   identifying an eroded area in the target area by detecting the inner layer in the target area.
Clause 15: The method of clause 14, comprising:
   displacing the image capturing device proximal to the target area.
Clause 16: The method of clause 14 or 15, comprising:
   displacing the image capturing device proximal to the target area using an unmanned aerial vehicle.
Clause 17: The method of any of clauses 14 to 16, wherein the image capturing device comprises a 3D scanning device, comprising:
   detecting a set of reference markers in the inner layer of eroded area; and
   referencing the 3D scanning device based on the set of reference markers.
Clause 18: The method of clause 18, comprising:
   obtaining 3D image data of the wind turbine blade shell component by 3D scanning the wind turbine blade shell component with the 3D scanning device.
Clause 19: The method of any of clauses 14 to 18, comprising:
   determining an erosion severity of the eroded area based on the identifying.
Clause 20: The method of any of clause 19, wherein determining the erosion severity of the eroded area comprises:
   comparing the obtained 3D image data to non-eroded 3D model data.
Clause 21: The method of clause 20, comprising:
   obtaining the non-eroded 3D data model from a memory.
Clause 22: The method of clause 20, comprising:
   generating the non-eroded 3D model data based on the obtained 3D image data as input data.
Clause 23: The method of any of clauses 17 to 22, wherein determining the erosion severity of the eroded area comprises determining a depth of the outer layer in the eroded area.
Clause 24: The method of any of clauses 17 to 22, wherein determining the erosion severity of the eroded area comprises determining a shape and/or size of the eroded area.
Clause 25: The method of claim 24, wherein determining the shape and/or size of the eroded area comprises imaging the inner layer in the eroded area.
Clause 26: The method of any of clauses 17 to 25, comprising:
   determining a maintenance operation based on the erosion severity.
Clause 27: The method of any of clause 26, wherein determining a maintenance operation based on the erosion severity comprises comparing the erosion severity to a threshold erosion severity.
Clause 28: A system comprising:
   the wind turbine blade shell component of any of clauses 1 to 11;
   a controller configured to:
      control an image capturing device to scan a target area of the wind turbine blade shell component; and
   identify an eroded area in the target area by detecting the inner layer in the target area.
Clause 29: The system of claim 28, wherein the controller is configured to:
   determine an erosion severity of the eroded area based on the identifying.
Clause 30: The system of clause 28 or 29, comprising:
   the image capturing device.
Clause 31: The system of any of clauses 28 to 30, comprising:
   an unmanned aerial vehicle, wherein the unmanned aerial vehicle comprises the image capturing device.
Clause 32: The system of clause 31, wherein the unmanned aerial vehicle comprises the controller.

## Claims

1. A wind turbine blade shell component, the wind turbine blade shell component comprising:
an outer layer (210) covering the wind turbine blade shell component; and
an inner layer (220) beneath the outer layer, wherein the inner layer comprises a first material (221) having a first property and a second material (222) having a second property, wherein the first property is different from the second property,
wherein the inner layer is readable by an image capturing device (400) to determine erosion of the outer layer.

2. The wind turbine blade shell component of claim 1, wherein the first material and the second material form a pattern.

3. The wind turbine blade shell component of claim 2, wherein the pattern defines a plurality of reference markers (231, 232, 233, 234) for the image capturing device.

4. The wind turbine blade shell component of any preceding claim, wherein the first material and the second material are arranged biaxially.

5. The wind turbine blade shell component of any preceding claim, wherein the first material and the second material are interweaved.

6. The wind turbine blade shell component of any preceding claim, wherein the first property and the second property are colors.

7. The wind turbine blade shell component of any preceding claim, wherein the wind turbine blade shell component comprises a leading edge portion of a wind turbine blade shell.

8. A method of determining erosion of the wind turbine blade shell component of any preceding claim, the method comprising:
scanning (1001) a target area of the wind turbine blade shell component using an image capturing device; and
identifying (1002) an eroded area in the target area by detecting the inner layer in the target area.

9. The method of claim 8, comprising:
displacing the image capturing device proximal to the target area using an unmanned aerial vehicle.

10. The method of any one of claim 8 or 9, wherein the image capturing device comprises a 3D scanning device, comprising:
detecting a set of reference markers in the inner layer of the eroded area; and
referencing the 3D scanning device based on the set of reference markers.

11. The method of claim 10, comprising:
obtaining 3D image data of the wind turbine blade shell component by 3D scanning the wind turbine blade shell component with the 3D scanning device.

12. The method of any of claims 8 to 11, comprising:
determining an erosion severity of the eroded area based on the identifying.

13. The method of claim 12, wherein determining the erosion severity of the eroded area comprises:
comparing the obtained 3D image data to non-eroded 3D model data.

14. The method of any of claims 10 to 13, comprising:
determining a maintenance operation based on the erosion severity.

15. A system comprising:
the wind turbine blade shell component of any of claims 1 to 7;
a controller (300) configured to:
control an image capturing device to scan a target area of the wind turbine blade shell component; and
identify an eroded area in the target area by detecting the inner layer in the target area.
